Europäisches Patentamt
European Patent Office
Office européen des brevets

Veröffentlichungsnummer: **0 276 722 A2**

# EUROPÄISCHE PATENTANMELDUNG

Anmeldenummer: 88100646.4

Int. Cl.[4] **C08G 73/02**

Anmeldetag: **19.01.88**

Priorität: **27.01.87 DE 3702300**

Veröffentlichungstag der Anmeldung:
**03.08.88 Patentblatt 88/31**

Benannte Vertragsstaaten:
**CH DE FR GB LI**

Anmelder: **BAYER AG**
**D-5090 Leverkusen 1, Bayerwerk(DE)**

Erfinder: **Bachem, Henning, Dr.**
**Wolfskaul 10**
**D-5000 Köln 80(DE)**
Erfinder: **Schröer, Wolf-Dieter, Dr.**
**Christian-Hess-Strasse 65**
**D-5090 Leverkusen(DE)**

## Wasserlösliche, vernetzbare Polykondensate.

Wasserlösliche, vernetzbare Polykondensate, sind die durch Umsetzung von

A) einem Reaktionsprodukt aus

1. s-Trichlortriazin

und

2. einem Amin, das eine endständige primäre oder sekundäure Aminogruppe und eine endständige quartäre Ammoniumgruppe enthält oder Gemische des Amins mit einem Diamin, das eine endständige primäre oder sekundäre und eine endständige tertiäre Aminogruppe enthält, im Molverhältnis 100:1 bis 1:1, im Verhältnis von 0.75 bis 1,15 Mol Amin pro Mol s-Trichlortriazin

mit

B) einem basischen Polymeren bestehend aus:

1. einem Polyamidamin mit einem Molekulargewicht von mindestens 1.000, hergestellt aus:

α) aliphatischen Polyaminen, die mindestens zwei zur Amidbildung befähigte Aminogruppen und mindestens eine weitere sekundäre Aminogruppe enthalten,

und

β) aliphatischen oder aromatischen Dicarbonsäuren mit 2 bis 12 C-Atomen bzw. deren funktionellen Derivaten

und oder

γ) 3 bis 6 C-Atome enthaltenden Aminocarbonsäuren oder deren Lactamen

oder

2. einem Polyalkylenpolyamin mit einem Molekulargewicht von mindestens 2.000, der Formel

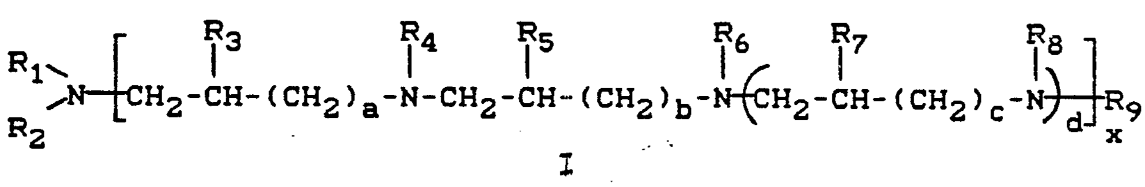

I

worin

$R_1$, $R_2$, $R_4$, $R_6$, $R_8$ und $R_9$ unabhängig voneinander für Wasserstoff oder einen $C_1$-$C_4$-Alkylrest,

$R_3$, $R_5$ und $R_7$ unabhängig voneinander für Wasserstoff, Methyl, Ethyl oder Hydroxy.

EP 0 276 722 A2

a, b und c unabhängig voneinander für eine ganze Zahl von 0 bis 4,
d für 0 oder 1 und
x für eine ganze Zahl von 20 bis 2.000
stehen,
oder
3. einem durch Polymerisation von 1,2-Alkyleniminen hergestellten Polyalkylenimin im Molverhältnis von 0,75 bis 1,15 Mol Basenstickstoff der Komponente B) pro Mol Vorprodukt A)
erhältlich.

## Wasserlösliche, vernetzbare Polykondensate

Gegenstand der Erfindung sind wasserlösliche, vernetzbare Polykondensate, die durch Umsetzung von
A) einem Reaktionsprodukt aus
1. s-Trichlortriazin
und
2. einem Amin, das eine endständige primäre oder sekundäre Aminogruppe und eine endständige quartäre Ammoniumgruppe enthält oder Gemische des Amins mit einem Diamin, das eine enständige primäre oder sekundäre und eine endständige tertiäre Aminogruppe enthält, im Molverhältnis 100:1 bis 1:1, im Verhältnis von 0,75 bis 1,15 Mol Amin pro Mol s-Trichlortriazin
mit
B) einem basischen Polymeren bestehend aus:
1. einem Polyamidamin mit einem Molekulargewicht von mindestens 1.000, hergestellt aus:
α) aliphatischen Polyaminen, die mindestens zwei zur Amidbildung befähigte Aminogruppen und mindestens eine weitere sekundäre Aminogruppe enthalten,
und
β) aliphatischen oder aromatischen Dicarbonsäuren mit 2 bis 12 C-Atomen bzw. deren funktionellen Derivaten
und/oder
γ) 3 bis 6 C-Atome enthaltenden Aminocarbonsäuren oder deren Lactamen
oder
2. einem Polyalkylenpolyamin mit einem Molekulargewicht von mindestens 2.000, der Formel

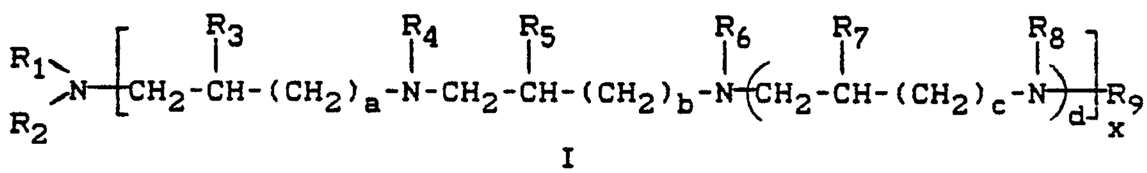

I

worin
$R_1$, $R_2$, $R_4$, $R_6$, $R_8$ und $R_9$ unabhängig voneinander für Wasserstoff oder einen $C_1$-$C_4$-Alkylrest,
$R_3$, $R_5$ und $R_7$ unabhängig voneinander für Wasserstoff, Methyl, Ethyl oder Hydroxy,
a, b und c unabhängig voneinander für eine ganze Zahl von 0 bis 4,
d für 0 oder 1 und
x für eine ganze Zahl von 20 bis 2.000
stehen,
oder
3. einen durch Polymerisation von 1,2-Alkyleniminen hergestellten Polyalkylenimin, im Molverhältnis von 0,75 bis 1,15 Mol Basenstickstoff der Komponente B) pro Mol Vorprodukt A)
erhältlich sind,
ihre Herstellung und ihre Verwendung als Papierhilfsmittel zur Erhöhung der Naßreißfestigkeit, der Retention und zur Entwässerungsbeschleunigung bei der Papierherstellung sowie als Nachbehandlungsmittel von gefärbtem Textilmaterial.

Die erfindungsgemäßen, vernetzbaren Polymere enthalten pro Mol an eingesetztem s-Trichlortriazin noch 0,1 bis 0,9 Mol an reaktiven Chloratomen. Es werden jeweils geringere Mengen an reaktiven Chloratomen als theoretisch möglich gefunden, da bei der Herstellung eine Hydrolyse als Nebenreaktion abläuft.

In der deutschen Offenlegungsschrift 3 400 052 und in der US-Patentschrift 3 446 284 werden wasserlösliche, halogenhaltige Polymere beschrieben, die durch Umsetzung von s-Trichlortriazin mit einem kationische Gruppen enthaltenden Amin und Weiterumsetzung mit einem basischen Dicyandiamid-Harz erhalten werden. Die Polymeren finden Verwendung als Textilhilfsmittel zur Verbesserung der Naßechtheiten von gefärbtem Textilmaterial. Im Gegensatz zu diesen Kondensaten lassen sich nach der vorliegenden Erfindung wesentlich höhere Molekulargewichte erzielen.

In der deutschen Offenlegungsschrift 2 626 495 werden reaktive, kationische Amin-Strukturen aufweisende Triazinsysteme beschrieben, die die Affinität anionischer Farbstoffe auf natürliche oder synthetische Fasermaterialien erhöhen.

Bevorzugte Ammoniumverbindungen bzw. Diamine A)2 sind die der Formeln

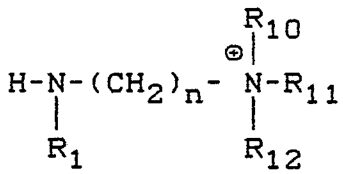

$A^{\ominus}$ II

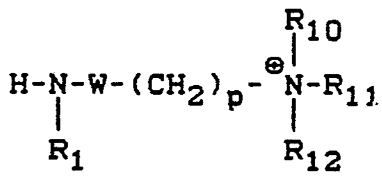

$A^{\ominus}$ III

und

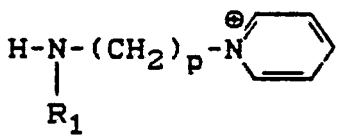

$A^{\ominus}$ IV

bzw.

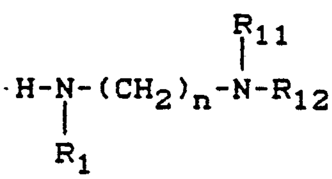

V

und

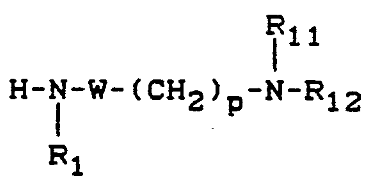

VI

worin

$R_1$ für Wasserstoff oder einen $C_1$-$C_4$-Alkylrest,

$R_{10}$, $R_{11}$ und $R_{12}$ unabhängig voneinander für Methyl oder Ethyl,

W für Phenylen oder Cyclohexylen,

n für eine ganze Zahl von 2 bis 6,

p für eine ganze Zahl von 1 bis 3 und

$A^{\ominus}$ für ein Anion, insbesondere Halogenid, Sulfat oder Methylsulfat stehen.

Bevorzugt werden 0.9 bis 1.1 Mol. Amin pro Mol s-Trichlortriazin verwendet.

Die Diamine V bzw. VI werden dabei vorzugsweise im Gemisch mit den Ammoniumverbindungen II bzw. III eingesetzt, wobei die molaren Mischungsverhältnisse II:V bzw. III:VI 100:1 bis 1:1, bevorzugt 100:1 bis 3:1, betragen.

Die basischen Polymeren B) bestehen vorzugsweise aus

1. einem Polyamidamin mit einem Molekulargewicht von 2.000 bis 30.000, hergestellt aus

α) aliphatischen Polyaminen der Formel

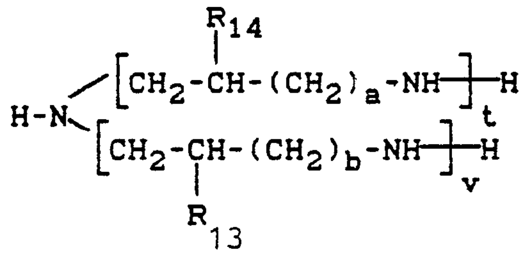 VII

in der

$R_{13}$ und $R_{14}$ unabhängig voneinander für Wasserstoff oder Methyl

a und b für eine ganze Zahl von 0 bis 4 und

t und v für eine ganze Zahl von 1 bis 5 stehen,

und

β) aliphatischen oder aromatischen Dicarbonsäuren mit 4 bis 10 C-Atomen oder deren Estern, Anhydriden, Halbestern oder Amiden,

und/oder

γ) 3 bis 6 C-Atome enthaltenden Aminocarbonsäuren oder deren Lactamen,

oder

2. einem Polyalkylenpolyamin der Formel I mit einem Molekulargewicht von mindestens 5.000

oder

3. einem durch Polymerisation von 1,2-Ethylenimin, hergestellten Produkt.

Die vernetzbaren Polykondensate werden insbesondere im Molverhältnis von 0,85 bis 1,1 Mol Basenstickstoff der Komponente B pro Mol Vorprodukt A hergestellt.

Bevorzugt sind erfindungsgemäße Polykondensate, die durch Umsetzung von

A) einem Reaktionsprodukt aus

1. s-Trichlortriazin

und

2. 1-Amino-3-(trimethylammonium)-propan-methylsulfat bzw. eines Gemisches aus 1-Amino-3-(trimethylammonium)-propan-methylsulfat und 1-Methyl-amino-3-dimethylamino-propan im Verhältnis 100:1 bis 3:1

im Verhältnis von 0,9 bis 1,1 Mol Amin pro Mol s-Trichlortriazin,

mit

B) einem basischen Polymeren bestehend aus:

1. einem Polyamidamin mit einem mittleren Molekulargewicht von 3.000 bis 15.000 aus Diethylentriamin und Adipinsäure,

oder

2. einem Polyalkylenpolyamin mit einem mittleren Molekulargewicht von 20.000 bis 150.000 hergestellt durch Kondensation von

1,2-Dichlorethan

mit

1,6-Diaminohexan, Dipropylentriamin, Methyl-bis-(3-aminopropyl)-amin oder Diethylentriamin

im Verhältnis von 0,85 bis 1,1 Mol Basenstickstoff von Komponente B) pro Mol A) erhältlich sind.

Die erfindungsgemäßen, vernetzbaren Polykondensate enthalten pro Mol an eingesetztem s-Trichlortriazin vorzugsweise 0,2 bis 0,8 Mol an reaktiven Chloratomen.

Sie sind vorzugsweise wasserlöslich und nicht gelartig. Die wäßrigen Lösungen weisen bei einem Feststoffgehalt von 5 bis 40 Gew.-%, vorzugsweise 10 bis 30 Gew.-%, eine Viskosität von 5 bis 300 mPas, vorzugsweise 10 bis 200 mPas auf.

Zur Herstellung des Vorproduktes A legt man das in Wasser oder wäßrig-organischem Medium suspendierte s-Trichlortriazin vor und gibt bei Temperaturen von 0 bis 20°C, vorzugsweise 2 bis 10°C, pro Mol s-Trichlortriazin 0,75 bis 1,15 Mol, vorzugsweise 0,9 bis 1,1 Mol eines Diamins bzw. Diamin-Gemisches zu. Anschließend rührt man 30 Minuten bis 4 Stunden, vorzugsweise 1 bis 2 Stunden bei obiger Temperatur nach, wobei das entstehende Produkt in Lösung geht.

Sowohl während der Zugabe des Amins als auch beim Nachrühren wird die entstehende Säure mittels einer KOH-, NaOH-oder Soda-Lösung neutralisiert, und man stellt pH-Werte von 5 bis 7,5, bevorzugt 5,5 bis 7, ein.

Nach der Abtrennung geringer unlöslicher Bestandteile wird das Vorprodukt A mit dem basischen Polymeren B umgesetzt. Eine Zwischenisolierung von A ist nicht erforderlich.

Zur Umsetzung mit dem Polymer B tropft man dieses als 15 bis 60 %ige, vorzugsweise 20 bis 40 %ige, wäßrige Lösung bei 10 bis 60°C, vorzugsweise 15 bis 40°C, zu dem vorgelegten Vorprodukt A und rührt anschließend solange nach, bis eine Probe der Rekationsmischung als 20 %ige Lösung bei 25°C eine Viskosität von zumindest 5, vorzugsweise 10 bis 200 mPas aufweist.

Der pH-Wert wird dabei ebenfalls mit Hilfe einer entsprechenden KOH-, NaOH-oder Soda-Lösung bei 5 bis 8.5, vorzugsweise 6 bis 7.5, eingestellt. Zur Beendigung der Kondensationsreaktion setzt man dem Reaktionsgemisch eine organische oder anorganische Säure, wie Ameisensäure, Essigsäure, Milchsäure, Citronensäure, Weinsäure, Oxalsäure, Malonsäure, Bernsteinsäure, Glutarsäure, Maleinsäure, Salzsäure, Phosphorsäure oder Schwefelsäure zu, so daß der pH-Wert bei 1 bis 6.5, vorzugsweise 2.5 bis 6, liegt.

Es werden lagerstabile, klare wäßrige Lösungen mit reaktiven Gruppen erhalten, die eine Vernetzung, z.B. zu wasserunlöslichen Filmen, erlauben und Reaktionen mit einem Textilsubstrat oder Papier eingehen.

Als Diamine (II) und (III) eignen sich Verbindungen, wie sie in der DE-A-2 626 495, Seiten 23 und 24, beschrieben werden.

Es seien insbesondere genannt:

1-Amino-2-(trimethylammonium)-ethanchlorid, 1-Amino-3-(trimethylammonium)-propan-methylsulfat, 4-Amino-benzyl-trimethylammonium-methylsulfat.

Als Diamine (V) und (VI) seien genannt:

1-Amino-3-dimethylamino-propan, 1-Methylamino-3-dimethylamino-propan und 4-Amino-benzyldimethylamin.

Es können auch Gemische dieser Verbindungen eingesetzt werden.

Als aliphatische Polyamine (VII) seien genannt:

Diethylentriamin, Triethylentetramin, Tetraethylenpentamin, Pentaethylenhexamin, Hexaethylenheptamin, Dipropylentriamin, Tripropylentetramin und Dihexamethylentriamin.

Bevorzugte Dicarbonsäure B1.$\beta$) sind Bernsteinsäure, Glutarsäure, Adipinsäure, Sebacinsäure, Terephthalsäure, Isophthalsäure und Itaconsäure.

Bevorzugte Verbindung B1.$\gamma$) ist $\epsilon$-Caprolactam.

Die Polyalkylenpolyamine der Formel (I) können durch Umsetzung von

Alkylenpolyaminen mit zwei primären und gegebenenfalls sekundären oder tertiären Aminogruppen, beispielsweise 1,2-Diaminoethan, 1,3-Diaminopropan, 1,4-Diaminobutan, 1,6-Diaminohexan, Diethylentriamin, Dipropylentriamin, Dihexamethylentriamin, Methyl-bis-(3-aminopropyl)-amin und Ethyl-bis-(3-aminopropyl)-amin,

mit gegenüber diesen Aminen bifunktionellen Verbindungen, insbesondere Dihalogenalkane, die durch eine OH-Gruppe substituiert sein können, und Epihalogenhydrinen, beispielsweise 1,2-Dichlorethan, 1,2-Dibromethan, 1-Chlor-2-brom-ethan, 1,2-Dichlorpropan, 1,3-Dichlorpropan, 1-Chlor-3-brom-propan, 1,4-Dichlorobutan, 1,5-Dichlorpentan, 1,6-Dichlorhexan, 1,3-Dichlor-2-hydroxypropan und Epichlorhydrin,

hergestellt werden.

Bevorzugte Umsetzungsprodukte der Formel (I) werden aus 1,6-Diaminohexan, Dipropylentriamin, Methyl-bis-(3-aminopropyl)-amin oder Diethylentriamin und 1,2-Dichlorethan hergestellt.

Die erfindungsgemäßen wasserlöslichen, vernetzbaren Polykondensate finden Verwendung als Papierhilfsmittel zur Erhöhung der Naßreißfestigkeit, zur Verbesserung der Retention sowie zur Entwässerungsbeschleunigung.

Dazu werden die in jedem Verhältnis mit Wasser mischbaren Produkte in verdünnter Form dem Papierstoff vor der Blattbildung bzw. vor dem Stoffauflauf zugesetzt, wobei die Dosierstelle so gewählt wird, daß eine gute Verteilung des Hilfsmittels in der Rohstoffsuspension gesichert ist. Bezogen auf das Trockengewicht des Papiers werden üblicherweise 0,1 bis 0,8 Gew.-% des Polykondensates verwendet. Die neuen Hilfsmittel können bei allen in der Papierfabrikation verwendeten Rohstoffe, z.B. bei gebleichtem und ungebleichtem Zellstoff, Holzschliff, Altpapier usw. verwendet werden.

Weiterhin eignen sich die vernetzbaren Polykondensate zur Verbesserung der Naß-und Waschechtheiten (bis 40°C) von mit anionischen Farbstoffen gefärbtem Textilmaterial. Hierbei sind natürliche Fasern, wie Baumwolle, Wolle bzw. Mischgewebe hieraus mit synthetischen Fasern, wie Polyamid, Polyacrylnitril oder Celluloseester zu nennen.

Dabei werden die neuen Hilfsmittel bevorzugt nach dem Färben oder Bedrucken der Textilmaterialien im Ausziehverfahren bei Flottenverhältnissen von 1:5 bis 1:50 bzw. im Kontinue-Verfahren auf dem Foulard zur Anwendung gebracht.

Die Einsatzmenge der erfindungsgemäßen Substanzen auf dem Foulard beträgt 2,0 bis 50 g (100 %iger Ware), bevorzugt 5,0 bis 20 g (100 %iger Ware) pro Liter Klotzflotte (Flottenaufnahme 100 %). Beim Ausziehverfahren werden 0,2 bis 5,0 % (100 %iger Ware), bezogen auf das Trockengewicht des Textilgutes

verwendet.

Die Nachbehandlung wird bei Temperaturen von 15 bis 100°C, vorteilhaft 20 bis 60°C, und einem pH-Wert von 6 bis 11, vorzugsweise 7 bis 10, durchgeführt.

Beispiel 1

a) Zu einer Lösung von 102 g 1-Amino-3-dimethylaminopropan in 300 ml Toluol gibt man bei 3 bis 7°C in 1 Stunde 95 ml Dimethylsulfat, rührt 30 Minuten bei 10°C und 1 Stunde bei 25°C.

Anschließend trennt man die Toluol-Phase ab, engt ein und trocknet bei 50°C im Vakuum. Man erhält 197 g eines klaren, gering gelblichen Öls, das langsam auskristallisiert.

NMR-Untersuchungen zeigen, daß die gewünschte Alkylierung in 3-Stellung mit 70 bis 80%iger Selektivität abläuft.

b) Zu 18,5 g (0,1 Mol) s-Trichlortriazin in 100 ml Wasser 25 g Eis gibt man bei 5°C unter Kühlung in 30 Minuten 25,0 der in Beispiel 1a) beschriebenen Verbindung, gelöst in 50 ml Wasser. Mit Hilfe einer 2 n NaOH-Lösung wird der pH-Wert dabei bei 5,2 bis 5,4 gehalten.

Nachdem ungelöste Bestandteile abfiltriert sind (0,5 g), erwärmt man auf 16°C und gibt bei pH 6,7 in 30 Minuten 39,4 g einer 50 %igen, wäßrigen Lösung eines Polyamidamins der DE-B-1 906 450, Spalte 6, Zeilen 16 bis 36, im Gemisch mit 39,4 ml Wasser zu. Man rührt 2 1 2 Stunden bei 25°C und pH 7,0, wobei die Viskosität steigt, und stellt dann mit Ameisensäure auf pH 5 ein.

Viskosität: 10 mPas

organisch gebundenes Chlor: 0,054 Mol

Feststoffgehalt: 15,5%.

Beispiel 2

Zu 46,3 g (0,25 Mol) s-Trichlortriazin in 50 ml Wasser 50 g Eis tropft man bei 1 bis 5°C in 50 Minuten unter starker Kühlung 49,0 g (0,28 Mol) 1-Amino-2-(trimethylammonium)-ethan-chlorid, gelöst in 50 ml Wasser und 110 ml 2 n NaOH.

Im Anschluß rührt man 1 Stundes bei 10°C. Der pH-Wert wird während der Zugabe und des Nachrührens mit einer 2 n NaOH-Lösung bei 6 gehalten.

Man filtriert ungelöste Anteile (1,8 g) ab, erwärmt auf 20°C und tropft bei pH 7,0 in 30 Minuten 102 g einer 50 %igen, wäßrigen Lösung eines Polyamidamins der DE-B-1 906 450, Spalte 6, Zeilen 16 bis 36, im Gemisch mit 102 ml Wasser zu.

Danach rührt man 2 1 2 Stunden bei pH 7,0 und 20 bis 22°C. Hierbei steigt die Viskosität des Kondensates an. Nun wird mit Ameisensäure auf pH 4,5 eingestellt.

Viskosität: 17 mPas

Feststoffgehalt: 20,3%

organisch gebundenes Chlor: 0,11 Mol

Beispiel 3

a) 53,0 g 1-Amino-3-dimethylamino-propan werden in 200 ml Wasser gelöst und bei 0 bis 5°C innerhalb von 90 Minuten mit 56,9 ml Dimethylsulfat versetzt. Anschließend wird 30 Minuten bei 0°C und 1 Stunde bei 25°C nachgerührt.

b) Zu 46,3 g (0,25 Mol) s-Trichlortriazin in 50 ml Wasser 50 g Eis läßt man bei 0 bis 5°C innerhalb 1 Stunde 164 g einer Lösung gemäß Beispiel 3a) zutropfen und rührt 1 Stunden bei 5°C nach. Der pH-Wert wird während der gesamten Umsetzungszeit mit Hilfe einer 10 %igen NaOH-Lösung bei 6 gehalten.

Man filtriert ab (<1 g), erwärmt auf 20°C und gibt bei pH 6,5 bis 7,0 in 45 Minuten 103 g einer 50 %igen, wäßrigen Lösung eines Polyamidamins der DE-B-1 906 450, Spalte 6, Zeile 16 bis 36, im Gemisch mit 103 ml Wasser zu.

Jetzt wird noch 20 Minuten bei 20°C und pH 7 gerührt, wobei die Viskosität steigt. Mit Hilfe einer Salzsäure-Lösung stellt man auf pH 2,5 ein.

Viskosität: 30 mPas (25°C)

Feststoffgehalt: 23,5%

organich gebundenes Chlor: 0,19 Mol.

Beispiel 4

a) 86.7 g 1-Amino-3-dimethylamino-propan werden bei 0 bis 5°C in 300 ml Wasser vorgelegt und bei dieser Temperatur unter Kühlung mit 80.7 ml Dimethylsulfat versetzt. Dann wird 30 Minuten bei 5°C und 1 Stunde bei 25°C nachgerührt.

b) Man legt 725 g Methyl-bis-(3-aminopropyl)-amin und 1.490 ml Wasser vor, gibt dann bei 120°C im Druckreaktor 500 g 1,2-Dichlorethan in 1 Stunde zu und rührt 90 Minuten weiter. Anschließend tropft man 2.150 ml Wasser zu, belüftet und entgast.

Viskosität: 85 mPas (25°C)
Feststoffgehalt: 25,0 Gew.%.

c) Zu einer Dispersion von 46,3 g (0,25 Mol) s-Trichlortriazin in 50 ml Wasser 50 g Eis gibt man bei 0 bis 5°C innerhalb 1 Stunde 162,7 g einer Lösung gemäß Beispiel 4a) und rührt 1 Stunde bei 5°C. Während der gesamten Umsetzung wird der pH-Wert mit einer 10 %igen NaOH-Lösung bei 6 gehalten.

Im Anschluß filtriert man ungelöste Bestandteile ab (<1.0 g) und fügt bei pH 6.5 bis 7.5 in 45 Minuten 250 g einer 25 %igen, wäßrigen Lösung gemäß Beispiel 4b) im Gemisch mit 150 ml Wasser zu. Die Temperatur während der Zugabe beträgt 15 bis 20°C.

Im Anschluß rührt man bei pH 7.5 und 30°C noch 40 Minuten nach. Hierbei steigt die Viskosität merklich an. Mit einer Phosphorsäure-Lösung stellt man auf pH 4.0 ein.

Viskosität: 64 mPas (25°C)
Feststoffgehalt: 20.2 Gew.-%
organisch gebundenes Chlor: 0,11 Mol.

Beispiel 5

a) 11,2 g 1-Amino-3-dimethylamino-propan werden bei 0 bis 5°C in 50 ml Wasser vorgelegt und bei dieser Temperatur mit 10,2 ml Dimethylsulfat versetzt. Danach wird 1 Stunden bei 5°C und 1 Stunde bei 25°C gerührt.

b) Zu einer Dispersion von 18.5 g (0.1 Mol) s-Trichlortriazin in 40 ml Wasser 20 g Eis gibt man bei 2°C in 45 Minuten eine Lösung gemäß Beispiel 5a) und rührt 90 Minuten nach. Während der gesamten Umsetzung wird der pH-Wert mit einer 2 n NaOH-Lösung bei 5.8 bis 6.0 gehalten.

Nach dem Abfiltrierten unlöslicher Anteile (0,2 g) fügt man bei 25 bis 30°C 106 g eines 25 %igen Polyalkylenpolyamins gemäß Beispiel 4b) im Gemisch mit 50 ml Wasser zu.

Nun wird 20 Minuten bei 20°C nachgerührt und dann mit einer Ameisensäure-Lösung auf pH 4.0 eingestellt.

Viskosität: 43 mPas (25°C)
Feststoffgehalt: 18,7 Gew.-%
organisch gebundenes Chlor: 0,04 Mol.

Beispiel 6

a) 41.0 g 1-Amino-3-dimethylamino-propan werden bei 0 bis 5°C in 80 ml Wasser 40 g Eis vorgelegt und bei dieser Temperatur mit 38 ml Dimethylsulfat versetzt. Danach wird 30 Minuten bei 5°C, 30 Minuten bei 20°C und 30 Minuten bei 45°C gerührt.

b) Zu einer Dispersion von 74 g (0,4 Mol) s-Trichlortriazin in 200 ml Wasser 100 g Eis/10 g $Na_2SO_4$ gibt man bei 0 bis 5°C in 35 Minuten eine Lösung gemäß Beispiel 6a) und rührt 2 Stunden bei 10°C. Während der gesamten Umsetzung wird der pH-Wert mittels einer 2 n NaOH-Lösung bei 5,5 bis 6,0 gehalten.

Nachdem unlösliche Anteile abfiltriert sind (4,7 g), gibt man bei 10 bis 20°C in 75 Minuten 300 g eines 20 %igen Polyalkylenpolyamins gemäß DE-A-28 33 654, Beispiel Seiten 7 und 8, im Gemisch mit 100 ml Wasser zu. Danach rührt man 15 Minuten bei 25°C und stellt mit einer Schwefelsäurelösung auf pH 3.8 ein.

Viskosität: 35 mPas (25°C)
Feststoffgehalt: 20.4 Gew.-%
organisch gebundenes Chlor: 0.13 Mol.

Beispiel 7

Man gibt bei 5 bis 10°C in 30 Minuten 115 ml einer Lösung gemäß Beispiel 6a) zu 37.0 g (0.2 Mol) s-Trichlortriazin in 100 ml Wasser 50 g Eis und rührt 2 Stunden bei 10°C nach. Während der gesamten Umsetzung wird der pH-Wert mittels einer Soda-Lösung bei 5.5 bis 7.0 gehalten.

Nun werden ungelöste Bestandteile abfiltriert (1.7 g). Man gibt bei 15 bis 20°C in 80 Minuten 110 g einer 25 %igen Lösung eines Polyalkylenpolyamins gemäß DE-A-23 51 754. Beispiel Seite 4. mit einem mittleren Molekulargewicht von 20.000 bis 150.000 im Gemisch mit 75 ml Wasser zu.

Danach rührt man 20 Minuten bei 30°C nach und stellt mit Hilfe einer Schwefelsäure-Lösung auf pH 3,5 ein.

Viskosität: 13 mPas (25°C)

Feststoffgehalt: 18.7 Gew.-%

organisch gebundenes Chlor: 0,05 Mol.

Ein ausgestrichener Film des Produktes wurde 4 Stunden bei 100°C getrocknet. Hierbei entsteht ein stark trübes, vernetztes, sprödes Polymer, das in Wasser unlöslich ist.

Beispiel 8

Wollgarne, die mit Hercosett S 7 "Superwash" ausgerüstet und mit einem Farbstoff der DE-A-2 404 314, Beispiel 54, gefärbt wurden, werden bei 50°C während 30 Minuten mit einer Flotte nachbehandelt, die im Liter 5,0 g des Reaktionsproduktes gemäß Beispiel 1b) enthält und mit Soda auf pH 9,0 bis 9,5 eingestellt ist. Dann wird gespült, mit Essigsäure abgesäuert und getrocknet. Die Echtheitsprüfungen der nachbehandelten Färbungen erreichen ohne negative Beeinflussung der Reibechtheiten ein deutlich höheres Niveau als unbehandelte Färbungen.

## Ansprüche

1. Vernetzbare Polykondensate, die durch Umsetzung von

A) einem Reaktionsprodukt aus

1. s-Trichlortriazin

und

2. einem Amin, das eine endständige primäre oder sekundäre Aminogruppe und eine endständige quartäre Ammoniumgruppe enthält oder Gemische des Amins mit einem Diamin, das eine endständige primäre oder sekundäre und eine endständige tertiäre Aminogruppe enthält, im Molverhältnis 100:1 bis 1:1.

im Verhältnis von 0.75 bis 1.15 Mol Amin pro Mol s-Trichlortriazin

mit

B) einem basischen Polymeren bestehend aus:

1. einem Polyamidamin mit einem Molekulargewicht von mindestens 1.000, hergestellt aus:

α) aliphatischen Polyaminen, die mindestens zwei zur Amidbildung befähigte Aminogruppen und mindestens eine weitere sekundäre Aminogruppe enthalten

und

β) aliphatischen oder aromatischen Dicarbonsäuren mit 2 bis 12 C-Atomen bzw. deren funktionellen Derivaten

und oder

γ) 3 bis 6 C-Atome enthaltenden Aminocarbonsäure oder deren Lactamen

oder

2. einem Polyalkylenpolyamin mit einem Molekulargewicht von mindestens 2.000, der Formel

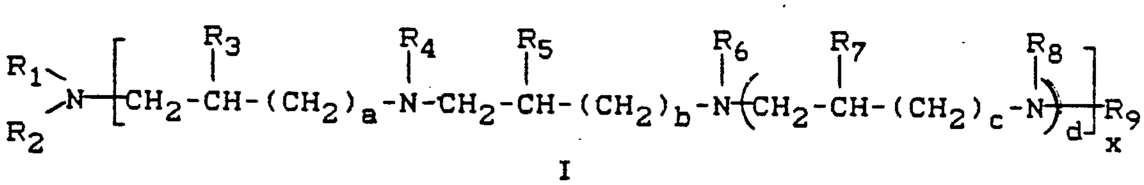

I

worin

$R_1$, $R_2$, $R_4$, $R_5$, $R_8$ und $R_9$ unabhängig voneinander für Wasserstoff oder einen $C_1$-$C_4$-Alkylrest, $R_3$, $R_6$ und $R_7$ unabhängig voneinander für Wasserstoff, Methyl, Ethyl oder Hydroxy, a, b und c unabhängig voneinander für eine ganze Zahl von 0 bis 4, d für 0 oder 1 und x für eine ganze Zahl von 20 bis 2.000 stehen,

oder

3. einem durch Polymerisation von 1,2-Alkyleniminen hergestellten Polyalkylenimin

im Molverhältnis von 0,75 bis 1,15 Mol Basenstickstoff der Komponenten B) pro Mol Vorprodukt A) erhältlich sind.

2. Vernetzbare Polykondensate nach Anspruch 1, deren Komponente A einem Reaktionsprodukt aus

1. s-Trichlortriazin

und

2. einem Amin der Formeln

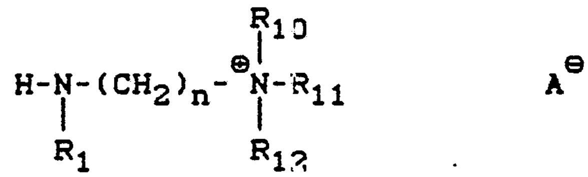

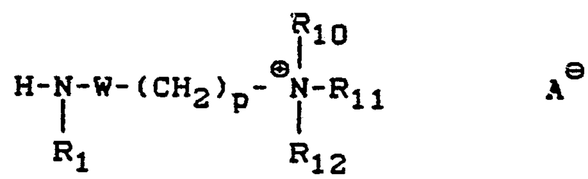

oder

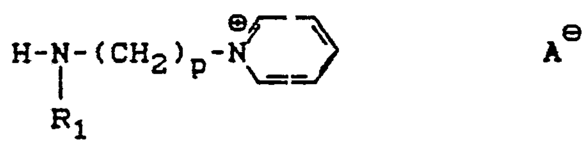

und gegebenenfalls

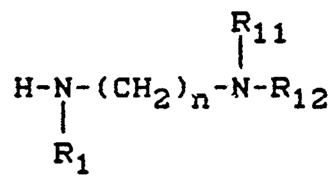

oder

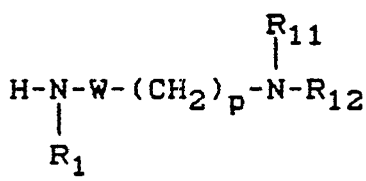

worin

$R_1$ für Wasserstoff oder einen $C_1$-$C_4$-Alkylrest,

$R_{10}$, $R_{11}$ und $R_{12}$ unabhängig voneinander für Methyl oder Ethyl,

W für Phenylen oder Cyclohexylen.
n für eine ganze Zahl von 2 bis 6.
p für eine ganze Zahl von 1 bis 3 und
A⊖ für ein Anion stehen.
im Molverhältnis von 0.9 bis 1.1 Mol. Amin pro Mol s-Trichlortriazin. entspricht.

3. Vernetzbare Polykondensate nach Anspruch 1. deren Komponente B aus
1. einem Polyamidamin mit einem Molekulargewicht von 2.000 bis 30.000. hergestellt aus
α) aliphatischen Polyaminen der Formel

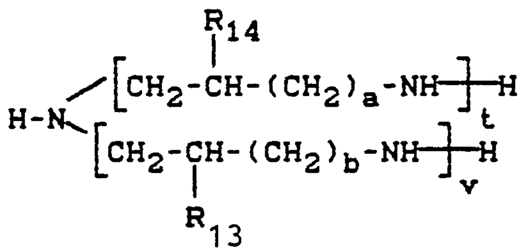

in der
$R_3$ und $R_4$ unabhängig voneinander für Wasserstoff oder Methyl
a und b für eine ganze Zahl von 0 bis 4 und
t und v für eine ganze Zahl von 1 bis 5 stehen,
und
β) aliphatischen oder aromatischen Dicarbonsäure mit 4 bis 10 C-Atomen oder deren Estern. Anhydriden. Halbestern oder Amiden,
und oder
γ) 3 bis 6 C-Atome enthaltenden Aminocarbonsäuren oder deren Lactamen.
oder
2. einem Polyalkylenpolyamin gemäß Anspruch 1 (B,2) mit einem Molekulargewicht von mindestens 5.000 oder
3. einem durch Polymerisation von 1.2-Ethylenimin erhaltenen Polyethylenimin
entspricht.

4. Verwendung Polykondensate nach Anspruch 1, die durch Umsetzung von 0.85 bis 1.1 Mol Basenstickstoff der Komponente B pro Mol der Komponente A erhältlich sind.

5. Vernetzbare Polykondensate nach Anspruch 1. die durch Umsetzung von
A) einem Reaktionsprodukt aus
1. s-Trichlortriazin
und
2. 1-Amino-3-(trimethylammonium)-propan-methylsulfat bzw. eines Gemisches aus 1-Amino-3-(trimethylammonium)-propan-methylsulfat und 1-Methyl-amino-3-dimethylamino-propan im Verhältnis 100:1 bis 3:1
im Molverhältnis von 0,9 bis 1,1 Mol Amin pro Mol s-Trichlortriazin.
mit
B) einem basischen Polymeren bestehend aus:
1. einem Polyamin mit einem mittleren Molekulargewicht von 3.000 bis 15.000 aus Diethylentriamin und Adipinsäure,
2. einem Polyalkylenpolyamin mit einem mittleren Molekulargewicht von 20.000 bis 150.000 hergestellt durch Kondensation von
α) 1.2-Dichlorethan
mit
β) Diethylentriamin. Dipropylentriamin. Methyl-bis-(3-aminopropyl)-amin oder 1.6-Diaminohexan
im Molverhältnis von 0.85 bis 1.1 Mol Basenstickstoff der Komponente B) pro Mol A)
erhältlich sind.

6. Vernetzbare Polykondensate nach Anspruch 1. deren 5 bis 40 gew.-%ige wäßrige Lösungen eine Viskosität von 5 bis 300 mPas aufweisen.

7. Anwendung der vernetzbaren Polykondensate des Anspruchs 1 als Papierhilfsmittel und als Nachbehandlungsmittel von gefärbtem Textilmaterial.